# NEW EUROPEAN PATENT SPECIFICATION

(11) **EP 0 217 755 B2**
(45) Date of publication and mention of the opposition decision: **15.12.1993**
(45) Mention of the grant of the patent: 10.04.1991
(21) Application number: 86830244.9
(22) Date of filing: 04.09.1986
(51) Int. Cl.: A23L 1/236

(54) **Production, conservation and sweetening of infusion of hot and/or cold coffee and other drinks in general**
Herstellen, Konservieren und Süssmachen einer warmen und/oder kalten Infusion von Kaffee oder anderen Getränken im allgemeinen
Production, conservation et édulcoration d'une infusion de café chaud ou froid et d'autres boissons en général

(30) Priority: 11.09.1985 IT 4854685
(43) Date of publication of application: 08.04.1987
(73) Proprietor: Caruson, Domenico, I-00181 Roma (IT)
(72) Inventor: Caruson, Domenico, I-00181 Roma (IT)
(74) Representative: Sneider, Enrico

(56) References cited:
- EP-A-01 205 61
- BE-A- 717 373
- BE-A- 735 739
- DE-A- 1 692 768
- FR-A- 2 275 159
- GB-A- 1 418 087
- GB-A- 1 440 257
- JP-A-59 011 156
- JP-B-16 226 0
- US-A- 2 333 027
- US-A- 3 708 396
- US-A- 3 829 588
- US-A- 4 004 039
- Quaderni di chimica del alimenti (Food Chemistry Noteboods) Guiliano and Stein pp 205-206
- Journal of Foodservice Systems, vol. 3, No.2, p. 107-119
- Journal of Food technology, July 1984, p. 50-55

## Description

### SUMMARY

It is known that sugar is composed of two molecules, one glucose and one of fructose, both in cyclic form.

An infusion of cold coffee like coffee and milk, white coffee, sweetened with sugar cannot be preserved for medium to long periods, even if stored in hermetically sealed containers because of their incompatibility with the above metioned components of sugar, which give rise to processes of oxidization and acidity.

In consideration of this and after long research I have found a process that can sweeten and preserve such infusions.

### DESCRIPTION OF THE INVENTION

The process consists in the preparation of an infusion of coffee which is dewaxed and optionally pasteurized, and/or stassanized in any order. The infusion is sweetened with aspartame. Sweetened with this system, the infusion of coffee can be preserved for medium to long periods especially in hermetically sealed containers without oxidative or acidic deterioration.

The same result can be obtained with Maltitol.

The object of this invention is a method or system for preparation of a long storable infusion of sweetened coffee, especially in suitable hermetically sealed containers.

Another object of this invention is a method or system for the preparation of other sweetened drinks like coffee and milk, white coffee, capable of long- storage especially in hermetically sealed containers.

Such substances are innocuous and likewise suitable for consumption by obese, cardiopathic and diabetic persons, (according to the statistics, in Italy alone there are about 3.500.000 diabetics).

Such new system of sweetening an infusion of hot and/or cold coffee allows the preservation of a manufactured, hermitally sealed product which can be consumed in bars and shops under normal conditions with the following advantages:
1) an infusion of pure coffee without preservatives, can be hygienically supplied and consumed without the manipulation that, to the contrary, happens in bars and shops nowadays;
2) the product has a consistent standard quality;
3) it satisfies the obese and diabetic's requirements for a sweetened infusion of cold coffee which does not contain sugar: thus these people are not deprived of their legitimate necessity of taste;
4) it also satisfies the obese and diabetic's right to a better observance of their health, withoutde- rogating from necessary alimentary and dietetic hygiene.

## Claims

1. Use of aspartame or maltitol for preserving for medium to long periods a hot and/or cold infusion of coffee, wherein the infusion is dewaxed and aspartame or maltitol are added, the amount of aspartame or maltitol varying from a minimum for the preservation of the unsweetened infusion to a maximum value intended to achieve the preservative and the sweetening.

2. A method for preserving a hot and/or cold coffee, according to Claim 1, wherein the infusion, dewaxed and treated with aspartame and/or maltitol, is subjected to pasteurization and/or stassan- ization and is stored in hermetically sealed containers.

## Patentansprüche

1. Eine Methode zur mittel- bis langfristigen Konservierung von heissem und/oder kaltem Kaffeeaufguss, wobei der Aufguss entwachst und Aspartam und/oder Multitol hinzugefügt wird, wobei die Menge des hinzugefugten Aspartams und Multitols zwischen einem Minimum fur die Konservierung des ungesüssten Aufgusses bis zu einem Maximum variiert, bei dem der Aufguss sowohl konserviert wie gesüsst wird.

2. Eine Methode zur Konservierung von kaltem und/ oderwarmem Aufguss nach Anspruch 1, wobei der entwachste und mitAspartam und/oder Multitol aufbereitete Aufguss pasteurisiert und/oder stassanisiert und in hermetisch verschlossenen Behältern aufbewahrt wird.

## Revendications

1. Une méthode pour la conservation pour le moyen - longe periode d'une infusion de café chaud et/ou froid en ce que l'infusion est de-cirée et l'on va ajouter de l'aspartame et du multitol, où la quantité d'aspartame et du multitol ajoutée variant de un valeur minimal pour la conservation d'une infusion non sucrée à à une valeur maximal pour la conservation et l'adoucissement.

2. Une méthode pour la conservation d'une infusio- ne de café chaud et/ou froid, conformément à la revendicatio 1 où la infusion est de-cirée et traitée avec aspartame et/ou maltitol, et soumise à la pasteurisation et/ou à la stassanisation et emmagasinée en récipients bouchés d'une manière herméutique.
